# EUROPEAN PATENT APPLICATION

(11) **EP 1 288 818 A1**
(43) Date of publication of application: **05.03.2003**
(21) Application number: 02019308.2
(22) Date of filing: 28.08.2002
(51) Int. Cl.: G06F 17/60

(54) **System for providing travel plan, system for and method of providing drive plan for movable body, and computer program**

(30) Priority: 31.08.2001 JP 2001264637
(71) Applicant: Pioneer Corporation, Tokyo-to (JP)
(72) Inventor: Yamazaki, Osamu, Tsurugashima-shi, Saitama-ken (JP); Shioda, Takehiko, Tsurugashima-shi, Saitama-ken (JP)
(74) Representative: Viering, Jentschura & Partner

(57) **Abstract**

A system (10) for providing a drive plan is provided with a movable body navigation terminal (16) for a user and a system operating site (11) for a navigation company, which are connected to each other through a communication line (15), to thereby provide drive plan information indicating one or a plurality of various drive plans depending on a requirement of the user. The movable body navigation terminal is mounted on a movable body. The system operating site presents the user with advertisement information meeting the requirement of the user from among advertisement information, which is entrusted in advance to the navigation company from a facility company, at the movable body navigation terminal as at least one portion of the drive plan information according to the order of priority based on a predetermined standard.

## Description

### BACKGROUND OF THE INVENTION

### 1. Field of the Invention

The present invention generally relates to a system for providing a travel plan, which connects (i) a user terminal that a user has at home, (ii) a facility terminal that a facility company such as a hotel, a restaurant, an amusement facility or the like has, and (iii) a movable body navigation terminal that is mounted on a vehicle or the like by the user, to a system operating site of a system operating company or of a navigation company through a communication line to thereby provide the user a travel plan at the user terminal and/or the movable body navigation terminal. The present invention also relates to a system for and a method of providing a drive plan for a movable body, which provide the user with a drive plan at the user terminal and/or the movable body navigation terminal, as well as to a computer program.

### 2. Description of the Related Art

Nowadays, navigation systems for helping to drive a vehicle are significantly spread and popularized. These navigation systems are designed to display various map data, current position data, route data to a destination, guidance data and the like on a display device or to output as voice or sound a warning message, a guidance message or the like for navigation by a speaker. The current position data are obtained by a GPS (Global Positioning System) apparatus or by a self-contained or built-in positioning apparatus such as a velocity sensor, an acceleration sensor, an angular velocity or the like mounted on a vehicle to obtain position information. Moreover, a communication navigation system, which is being developed now, is equipped with a wireless communication device and is designed to exchange radio messages with an outer information source and to catch and display objective information or to output it as voice or sound, thereby helping to drive.

As one example of using these navigation systems, there is a system available for a safe and comfortable drive achieved by preparing and inputting a drive plan in advance, to inform a driver of a route direction, a view of town along the route, a geophysical feature, a distance to a destination, an arrival time or the like during an actual drive as the occasion demands while the driver confirms the driving condition and checks it with the drive plan.

Moreover, there is a system for providing a guidance of various facilities at a tourist attraction, for example, information on a hotel, a ryokan or a Japanese-style inn or the like and information on an amusement facility, a restaurant / a cafeteria, a resting place, a parking lot on a driving route, as drive plan information.

Facility companies, which operate those facilities, usually desire to effectively and efficiently provide a driver with information on their facilities that they operate. On that account, the companies often register their advertisements on a searching site which a driver uses at a navigation apparatus, or the companies put them on a homepage of a plan making site which the driver uses when preparing a drive plan, as a place of providing an advertisement, so that they can be displayed with a searching screen when the driver accesses the site. Moreover, it is conceivable that the companies put their advertisements on a magazine related to a drive and display them on a large display device placed on a street.

However, those advertisements have little meaning to the facility companies if their own facilities are not used, and it is necessary to get a driver's attention as much as possible and to have their facilities chosen. The location of the advertisement, its size, and/or an idea of increasing the frequency of hitting a search when it is searched have been examined substantially, but unfortunately, an effective method has not been found out yet.

### SUMMARY OF THE INVENTION

It is therefore an object of the present invention to provide a system for providing a travel plan, a system for and a method of providing a drive plan for a movable body, and a computer program, with which facility companies can effectively or efficiently inform users of their facilities and the like so that the users use the facilities.

The above object of the present invention can be achieved by a system for providing a travel plan comprising a communication terminal for a user and a system operating site for a system operating company, which are connected to each other through a communication line, to thereby provide travel plan information indicating one or a plurality of various travel plans depending on a requirement of the user, wherein the system operating site presents the user with advertisement information meeting the requirement of the user from among advertisement information, which is entrusted in advance to the system operating company from a facility company, at the communication terminal as at least one portion of the travel plan information according to the order of priority based on the amount of a fee required for entrusting the advertisement information, which is paid to the system operating company from the facility company.

According to the system for providing a travel plan of the present invention, a connection between (i) the communication terminal for the user, such as a movable body navigation terminal or a user terminal including a personal computer, a mobile device, a cellular phone, and the like, and (ii) the system operating site for the system operating company through a communication line makes it possible to present the appropriate travel plan information, which helps to travel depending on the requirement of the user, from the system operating site. In this case, moreover, the advertisement information, which has been entrusted from the facility company, is presented to the user as at least one portion of the travel plan information, not according to random order, irregular order, nor arbitrary order, but according to the order of priority based on the amount of a fee required for the entrustment of the advertisement information, which is paid to the system operating company from the facility company. Therefore, the facility company not only can learn in which order the advertisement information on their facilities will be presented to the user, by the amount of the fee required for the entrustment of the advertisement information to the user, but also can raise the order of priority on purpose by dealing with the system operating company. As a result, the facility company makes it possible that the advertisement information on their facilities that they operate gets a user's attention as one portion or as the whole of the travel plan information, and the facility company can efficiently increase the possibility to have the user choose this.

The above object of the present invention can be achieved by a system for providing a drive plan comprising a movable body navigation terminal for a user and a system operating site for a navigation company, which are connected to each other through a communication line, to thereby provide drive plan information indicating one or a plurality of various drive plans depending on a requirement of the user, the movable body navigation terminal being mounted on a movable body, wherein the system operating site presents the user with advertisement information meeting the requirement of the user from among advertisement information, which is entrusted in advance to the navigation company from a facility company, at the movable body navigation terminal as at least one portion of the drive plan information according to the order of priority based on a predetermined standard.

According to the system for providing a drive plan for a movable body of the present invention, a connection between (i) the movable body navigation terminal for the user and (ii) the system operating site for the navigation company through a communication line makes it possible to present the appropriate drive plan information, which helps to drive depending on the requirement of the user, from the system operating site. In this case, moreover, the advertisement information, which has been entrusted from the facility company, is presented to the user as at least one portion of the drive plan information, not according to random order, irregular order, nor arbitrary order, but according to the order of priority based on the predetermined standard. Therefore, the facility company not only can learn in which order the advertisement information on their facilities will be presented to the user, by learning this predetermined standard in advance, but also can raise the order of priority on purpose by dealing with the system operating company. As a result, the facility company makes it possible that the advertisement information on their facilities that they operate gets a user's or a driver's attention as one portion or as the whole of the drive plan information, and the company can efficiently increase the possibility to have the user or the driver choose this.

In one aspect of the system for providing a traveling plan for a movable body of the present invention, the system operating site is further connected to a user terminal, which is not mounted on the movable body, through the communication line and the requirement of the user is transmitted to the system operating site from the user terminal.

According to this aspect, the user can require the drive plan with reference to the travel guidance information and the advertisement information on various facilities by the user's accessing the system operating site from the user terminal such as a personal computer or the like installed at the user's home or the like, before driving. In response to this, it is possible to present the drive plan information to the user terminal and/or the movable body navigation terminal by the system operating site. Incidentally, as for the drive plan information received at the user terminal, it is possible to store it in smart media such as a memory stick and the like to install it into the movable body navigation terminal. It is also possible to install it into the movable body navigation terminal further through the communication line.

In another aspect of the system for providing a traveling plan for a movable body of the present invention, the system operating site is further connected to a facility company terminal installed at a facility of the facility company through the communication line and the advertisement information is transmitted to the system operating site from the facility terminal.

By constituting in this manner, it becomes possible that the facility company accesses the system operating site from the terminal for the facility company such as a personal computer or the like, to register the advertisement information which will be presented to the user, to change it, or to delete it.

In another aspect of the system for providing a traveling plan for a movable body of the present invention, the advertisement information is presented sequentially according to the order of priority when it is presented as one portion of the drive plan information.

According to this aspect, the advertisement information of the facility company is presented sequentially according to the order of priority; for example, it is presented one by one as a display screen. This makes it possible that the advertisement information with high priority meets the eye of the user and that if the user adopts this, the advertisement information with low priority will not do that. Namely, the facility company, whose priority is high, can achieve an original purpose of the advertisement because of the high priority.

In another aspect of the system for providing a traveling plan for a movable body of the present invention, the advertisement information is presented in a form of a table or list in which the advertisement information are ranked according to the order of priority when it is presented as one portion of the drive plan information.

According to this aspect, the advertisement information of the facility company is presented in the from of the table or list in which the advertisement information are ranked according to the order of priority on a display screen, for example, so that the advertisement information with high priority, which is located at the head of the list or at a prominent place or which is marked according to how high the order of priority is, for example, meets the eye of the user. Namely, the facility company, whose priority is high, can achieve an original purpose of the advertisement because of the high priority.

In another aspect of the system for providing a traveling plan for a movable body of the present invention, the predetermined standard is the amount of a fee required for entrusting the advertisement information, which is paid to the navigation company from the facility company.

According to this aspect, in the case that the advertisement information on a plurality of facilities is outputted by a search or the like, the order of the presentation to the user is simply and clearly decided by the amount of an advertisement fee on which each facility company has spent for its facility or facilities. Then, at the movable body navigation terminal, the advertisement information may be presented to the user according to this order of priority.

In another aspect of the system for providing a traveling plan for a movable body of the present invention, the system operating site further comprises a plan preparing device for preparing a drive plan including a service indicated by the advertisement information as the drive plan information and the prepared drive plan is presented to the user at the movable body navigation terminal.

According to this aspect, a drive plan including a service indicated by the advertisement information, which meets the requirement of the user, is prepared by the plan preparing device at the system operating site. Then, the drive plan prepared in the above manner is presented to the user at the movable body navigation terminal. Therefore, the facility company can provide the advertisement information in the way that it is included in the drive plan, and if the user adopts this drive plan, the facility company can achieve an original purpose of the advertisement.

In another aspect of a system for providing a traveling plan for a movable body of the present invention, advertisement information meeting a current position detected at the movable body navigation terminal is presented from among the entrusted advertisement information in addition to the requirement of the user.

According to this aspect, the advertisement information, which meets the requirement of the user and which meets the current position detected by a self-contained positioning apparatus, a GPS apparatus, or the like at the movable body navigation terminal, is presented from among the entrusted advertisement information by the movable body navigation terminal. For example, if the requirement of the user is a family restaurant, family restaurants which are close to a current position or which are along a scheduled route near the current position are presented to the order of priority.

In another aspect of a system for providing a traveling plan for a movable body of the present invention, the system operating site comprises: an advertisement information storing device for registering the advertisement information which the facility company entrusts to the navigation company; a search device for searching the advertisement information storing device for the advertisement information meeting the requirement of the user; and a transmitting device for transmitting the searched advertisement information to the movable body navigation terminal.

According to this aspect, the advertisement information storing device stores the advertisement information which the facility company entrusts to the navigation company and the amount of its fee. The advertisement information is information on facilities such as a hotel and the like, which is registered to the system operating site by the facility company and which is to be presented to the user. Moreover, the amount of the fee paid when registering becomes the information on a search for the order of priority. Namely, the amount of money reflects the facility company's management importance to its facility or facilities.

The search device is intended to search for the stored advertisement information to prepare a drive plan. Moreover, if a plurality of advertisement information on a plurality of facilities are outputted after the search, the order of priority between them are examined or searched. The facility company's management importance to its business can be judged by the amount of an advertisement fee and the order of presentation to the user is then decided.

Then, the transmitting device is intended to transmit the advertisement information to the movable body navigation terminal from the system operating site. As a transmitting medium, an Internet network, a wireless line network, and the like are generally used.

Therefore, according to this aspect, by searching the advertisement information storing device for the advertisement information meeting the requirement of the user and by transmitting this by the transmitting device, it is possible to present the appropriate drive plan information, which helps to drive according to the requirement of the user. In this case, moreover, it is possible to present it to the user as at least one portion of the drive plan information according to the order of priority by the predetermined standard.

An aspect including the above mentioned advertisement information storing device, the search device, and the like may be designed such that the transmitting device sequentially transmits the searched advertisement information according to the order of priority.

By constituting in this manner, it is possible to present the advertisement information according to the order of priority at the movable body navigation terminal.

Incidentally, in this aspect including the advertisement information storing device, the search device, and the like, the search device may be designed to search the advertisement information meeting the requirement of the user according to the order of priority. Alternatively, the transmitting device may be designed to transmit the searched advertisement information with information indicating the order of priority. Alternatively, the transmitting device may be designed to transmit the searched advertisement information with it ranking hierarchically according to the order of priority. In any case, it is possible to present the advertisement information according to the order of priority at the movable body navigation terminal.

In the aspect including the above mentioned advertisement information storing device, the search device, and the like, it may be designed such that the system operating site further comprises a map data storing device for storing map data and the search device searches for the advertisement information meeting the requirement of the user, with adding to a search condition such a condition that is defined by a relative relationship between a facility position of the facility company and a current position, which is detected at the movable body navigation terminal, on a map shown by the stored map data.

By constituting in this manner, it is possible to present more timely the advertisement information at the movable body navigation terminal according to the current position of the movable body because a search by the above mentioned search device is performed, with adding to a search condition such a condition that is defined by a relative relationship between a facility position of the facility company and a current position, which is detected at the movable body navigation terminal, (e.g. such a condition that a facility is closed to a current position and the like). Incidentally, as a detecting device, which is mounted on a movable body, for detecting a current position, there is a GPS apparatus or a self-contained positioning apparatus used with a velocity sensor, an acceleration sensor, an angle velocity sensor, and the like.

In the aspect including the above mentioned advertisement information storing device, the search device, and the like, it may be designed such that the system operating site further comprises a map data storing device for storing map data and the search device searches for the advertisement information meeting the requirement of the user, with adding to a search condition such a condition that is defined by a relative relationship between (i) a facility position of the facility company and (ii) a scheduled route to a destination, which is set in advance, as well as a current position, which is detected at the movable body navigation terminal, on a map shown by the stored map data.

By constituting in this manner, it is possible to present more timely the advertisement information at the movable body navigation terminal according to the current position of the movable body because a search by the above mentioned search device is performed, with adding to a search condition such a condition that is defined by a relative relationship between (i) the facility position of the facility company and (ii) the scheduled route and the current position, which is detected at the movable body navigation terminal, (e.g. such a condition that a facility is along to a scheduled route near a current position and the like).

In the aspect including the above mentioned advertisement information storing device, the search device, and the like, it may be designed such that the system operating site further comprises a user data storing device for storing user data indicating an attribute of a user and the search device searches for the advertisement information meeting the requirement of the user, with adding to a search condition such a condition that is defined by the stored user data.

By constituting in this manner, it is possible to present more appropriate advertisement information at the movable body navigation terminal according to the user's attribute because a search by the search device is performed, with adding to a search condition such a condition that is defined by the user data, which indicate the attribute of the user, such as user's tastes, favorites, family structure, age, sex, and the like and which are registered in the user data storing device, (e.g. such a condition that a facility suits user's tastes and the like).

In the aspect including the above mentioned advertisement information storing device, the search device, and the like, it may be designed such that the system operating site further comprises a drive plan data storing device for storing drive plan data indicating a past drive plan and the search device searches for the advertisement information meeting the requirement of the user, with adding to a search condition such a condition that is defined by the stored drive plan data.

By constituting in this manner, it is possible to present more appropriate advertisement information at the movable body navigation terminal according to a user's past drive history because a search by the search device is performed, with adding to a search condition such a condition that is defined by the past drive plan indicated by the drive plan data, and the like and which are registered in the drive plan data storing device, (e.g. such a condition that it is in the same kind of the past drive plane or plans, or it is in the different kind from the past drive plan or plans and the like) to a search condition.

The above object of the present invention can be achieved by a first computer program, which may be stored in a program storage device readable by a computer, or which may be carried as a computer data signal by a carrier wave. The computer program of instructions causes a computer to function as a movable body navigation terminal in the above-described system for providing a traveling plan for a movable body of the present invention (including its various aspects).

According to the first computer program of the present invention, as a computer reads and executes the program of instructions from the program storage device, such as a CD-ROM (Compact Disc - Read Only Memory), a DVD-ROM (DVD Read Only Memory), a hard disk, a floppy disk or the like, or as it executes the program of instructions after downloading the program through communication device, the movable body navigation terminal for a user in the above-described system for providing a drive plan for a movable body of the present invention can be relatively easily.

The above object of the present invention can be achieved by a second computer program, which may be stored in a program storage device readable by a computer, or which may be carried as a computer data signal by a carrier wave. The computer program of instructions causes a computer to function as a system operating site in the above-described system for providing a traveling plan for a movable body of the present invention (including its various aspects).

According to the second computer program of the present invention, as a computer reads and executes the program of instructions from the program storage device, such as a CD-ROM, a DVD-ROM, a hard disk, a floppy disk or the like, or as it executes the program of instructions after downloading the program through communication device, the system operating site for a navigation company in the above-described system for providing a drive plan for a movable body of the present invention can be relatively easily

The above object of the present invention can be achieved by a method of providing a drive plan for a movable body in a system for providing a drive plan comprising a movable body navigation terminal for a user and a system operating site for a navigation company, which are connected to each other through a communication line, to thereby provide drive plan information indicating one or a plurality of various drive plans depending on a requirement of the user, the movable body navigation terminal being mounted on a movable body, the method comprising the process of: presenting, from the system operating site, the user with advertisement information meeting the requirement of the user from among advertisement information, which is entrusted in advance to the navigation company from a facility company, at the movable body navigation terminal as at least one portion of the drive plan information according to the order of priority based on a predetermined standard.

According to the method of operating a traveling plan for a movable body of the present invention, as is the case with the above mentioned system for providing a traveling plan for a movable body of the present invention, the connection of the movable body navigation terminal for the user to a system operating site for the navigation company through a communication line makes it possible to present the appropriate drive plan information, which helps to drive depending on the requirement of the user, from the system operating site. In this case, moreover, the advertisement information, which has been entrusted from the facility company, is presented to the user as at least one portion of the drive plan information according to the order of priority obtained by the predetermined standard.

In one aspect of a method of providing a traveling plan for a movable body of the present invention, the predetermined standard is a fee required for entrusting the advertisement information, which is paid to the navigation company from the facility company.

According to this aspect, in the case that a plurality of advertisement information on a plurality of facilities are outputted by a search or the like, the order of presentation to the user is simply and clearly decided by the amount of an advertisement fee on which each facility company has spent for its facility or facilities. Then, at the movable body navigation terminal, the advertisement information may be presented to the user according to this order of priority.

In another aspect of a method of providing a traveling plan for a movable body of the present invention, advertisement information meeting the current position detected at the movable body navigation terminal is presented from among the entrusted advertisement information in addition to the requirement of the user.

According to this aspect, advertisement information, which meets the requirement of the user and which meets a current position detected by a self-contained positioning apparatus, a GPS apparatus, or the like at the movable body navigation terminal, is presented from among the entrusted advertisement information by the movable body navigation terminal. For example, if the requirement of the user is a family restaurant, family restaurants which are close to a current position or which are along a scheduled route near the current position are presented to the order of priority.

The nature, utility, and further features of this invention will be more clearly apparent from the following detailed description with reference to preferred embodiments of the invention when read in conjunction with the accompanying drawings briefly described below.

### BRIEF DESCRIPTION OF THE DRAWINGS

FIG. 1 is a block diagram showing the whole structure of a system for providing a traveling plan for a movable body in a first embodiment of the present invention;
FIG. 2 is a block diagram showing the structure of a system administering apparatus, which is a constitutional element of the system for providing the traveling plan for the movable body associated with the first embodiment;
FIG. 3 is a block diagram showing the structure of a navigation apparatus mounted on the movable body associated with the first embodiment;
FIG. 4 is a view indicating one example of a table showing the order of priority associated with the first embodiment;
FIG. 5 is a sequence chart showing an operational flow of the system for providing the traveling plan for the movable body associated with the first embodiment with time;
FIG. 6 is a sequence chart showing an operational flow of a system for providing a traveling plan of a movable in a second embodiment of the present invention with time;
FIG. 7 is a sequence chart showing an operational flow of a system for providing a traveling plan of a movable in a fourth embodiment of the present invention with time;
FIG. 8 is a sequence chart showing an operational flow of a system for providing a traveling plan of a movable in a fifth embodiment of the present invention with time; and
FIG. 9 is a sequence chart showing an operational flow of a system for providing a traveling plan of a movable in a sixth embodiment of the present invention with time.

### DETAILED DESCRIPTION OF THE PREFERRED EMBODIMENTS

Referring to the accompanying drawings, embodiments of the present invention will be now explained. Each embodiment, which will be described below, is intended to apply a system for providing a traveling plan for a movable body as one example of a system for providing a travel plan of the present invention to a system associated with an on vehicle navigation system. Namely, in embodiments below, one example of a communication terminal in the system for providing the travel plan of the present invention is constructed from a user terminal or a navigation terminal, and drive plan information is provided as one example of travel plan information.

### (I) First Embodiment

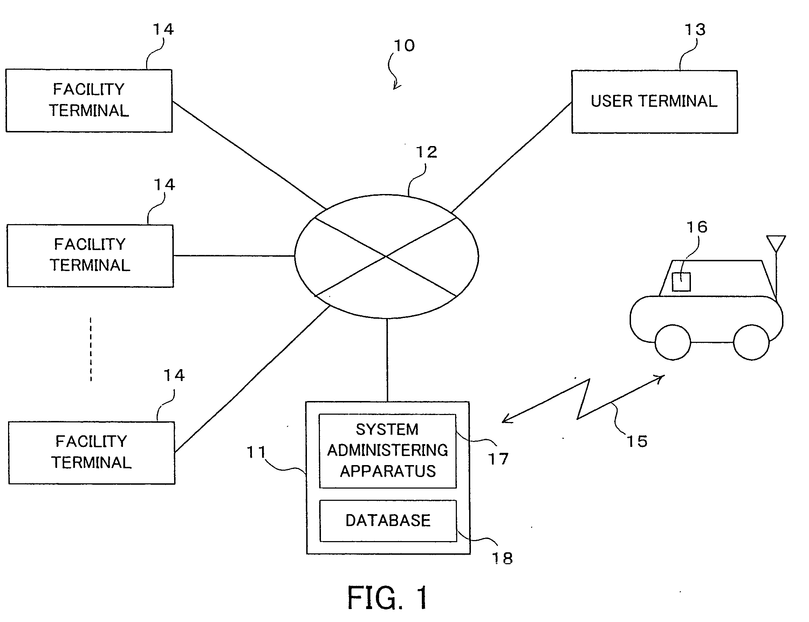

Firstly, the system for providing a traveling plan for a movable body in the first embodiment will be explained with reference to FIG. 1 to FIG. 4.

As shown in FIG. 1, a system 10 for providing a traveling plan for a movable body in the first embodiment is provided with: a system operating site 11 for a navigation company, which is a company that operates the system 10; a user terminal 13 for a user, and facility terminals 14 for a facility company, both of which are connected to the system operating site 11 through an Internet network 12; and a navigation terminal 16 for a user mounted on a vehicle as one example of a movable body, which is connected to the system operating site 11 through a wireless line 15.

The system operating site 11 is provided with a system administering apparatus 17 and a database 18. The administering apparatus 17 is, as will be described in detail later, intended to control an operation and an administration of the whole system. The database 18 is intended to categorize various data required for presentation of a drive plan and to record them. The company that operates the system 10 for providing a traveling plan for a movable body (hereunder, the company is merely referred to as a "navigation company") administrates and operates the system administering apparatus 17 and the database 18, so as to provide a service for the user, who uses a movable body, and facility companies, thereby deriving its income.

The Internet network 12 is intended to connect the system operating site 11 with the user terminal 13 and the facility terminals 14. It preferably uses a predetermined Internet line, which is generally provided.

The user terminal 13 is a terminal of a personal computer or the like that a user installs at home or the like and is connected to the system operating site 11 through the Internet network 12 to prepare drive plans. Incidentally, when preparing the drive plans, it is possible to pay a navigation company a predetermined amount of money or to pay it a constant amount of a fee during a certain period, thereby using the system freely in the meantime.

The facility terminals 14 are terminals installed at facilities such as a hotel, a restaurant or the like and are connected to the system operating site 11 through the Internet network 12. Various pieces of information on the facilities are provided by the facility companies and the communications with the navigation company are performed through this terminal.

The navigation terminal 16 is a navigation apparatus mounted on the movable body that the user uses and is connected to the system operating site 11 through the wireless line 15. It transmits a current position, a travel situation or the like of the movable body, requires a search for a drive plan under a condition that the user desires, and receives the result. The navigation terminal 16 is an important element which constitutes the present invention and has a typical navigation function. Its structure will be explained in detail below.

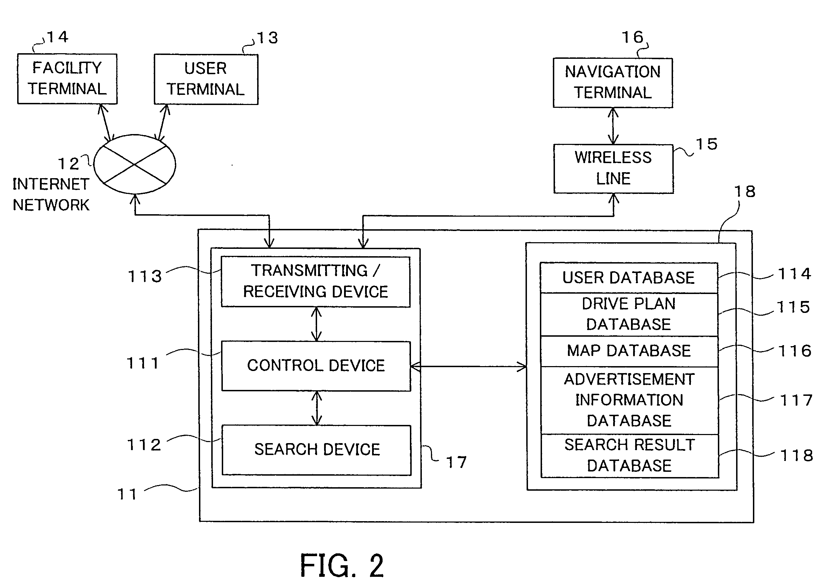

Next, the system operating site 11 will be explained with reference to FIG. 2.

As shown in FIG. 2, the system operating site 11 is provided with the system administering apparatus 17 and the database 18. The system administering apparatus 17 is equipped with a control device 111, a search device 112, and a transmitting / receiving device 113. The database 18 is equipped with a user database 114, a drive plan database 115, a map database 116, an advertisement information database 117, and a search result database 118. Obviously, necessary structures may be further added to this basis structure.

The control device 111 of the system administering apparatus 17 is intended to integrate and control each constitutional element of the system operating site 11 and to communicate with facility companies and users through the transmitting / receiving device 113 to perform its control, for example. The computer system plays its core part.

The search device 112 is intended to search for a facility and/or a place that a user desires on the basis of a condition inputted from the navigation terminal 16 or the user terminal 13. It uses information recorded on the database 18 as search data to search.

The transmitting / receiving device 113 sends transmitting information formed at the control device 111 to the user terminal 13, the facility terminal 14, or the navigation terminal 16. On the other hand, it receives information sent from the user terminal 13, the facility terminal 14, or the navigation terminal 16 and transmits it to the control device 111. The transmission and reception to and from the user terminal 13 and the facility terminal 14 are performed through the Internet network 12 and those to and from the navigation terminal 16 are performed through the wireless line 15.

In the user database 114 of the database 18, information on a user who uses the system 10 for providing a traveling plan for a movable body or information indicating the attribute of the user is recorded. For example, a user ID, information inputted to prepare a drive plan from the user terminal 13 by a user, information on communication with the system administering apparatus 17, and the like are recorded, and they are used as search data next time information provision of a plan preparation is required. They include places at which a user has driven, facilities at which a user has used, the type of a vehicle, user's tastes, and the like, for example.

The drive plan database 115 is used as information in preparation of the drive plan when a user inputs it from the user terminal 113. Traffic routes, fees to use, facilities, event information, and the like in various locations are stored in it. Searching is performed according to the condition that the user inputs on the basis of these stored information, and some information meeting the user's condition is provided. The user chooses what meets his or her desire among them to prepare the drive plan.

The map database 116 is intended to store map information for navigation. It is presented when a user prepares the drive plan and is used for decision of a driving route. Moreover, while driving, it is used to obtain information on a current position at which a vehicle is now driving and to search for objective facilities and the like within a predetermined range with the current position as a standard, when searching for them on the basis of the condition of a plan presented from a user. Furthermore, the searched facilities and the like may be marked on a map obtained from the map database 116 to inform a vehicle. It is possible to display it with a required time length if a vehicle speed is learned.

The advertisement information database 117 is intended to record advertisement information which a facility company entrusts to a navigation company. The advertisement information is information showing facilities, which is provided for the navigation company to present a user with the facilities, such as a hotel and the like, which the facility company operates. The cost of the commission, i.e. the sum of advertisement fees paid to the navigation company is also recorded in the information. The sum of the advertisement fees is used as important data for searching as the order of priority.

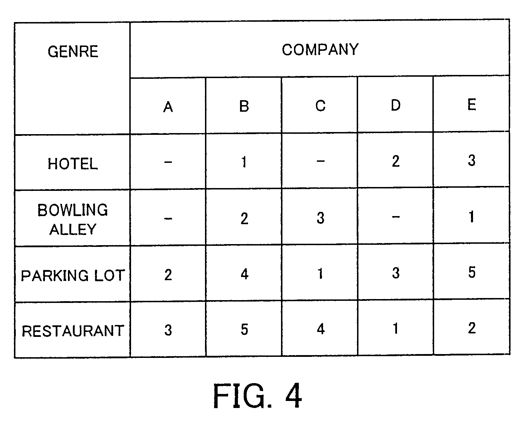

The search result database 118 is intended to hold search results at the search device 112 described above. Candidate facilities are recorded with the order of priority in a predetermined table format. They are presented to a user from this table according to the order of priority. The table format will be explained in detail later with reference to FIG. 4.

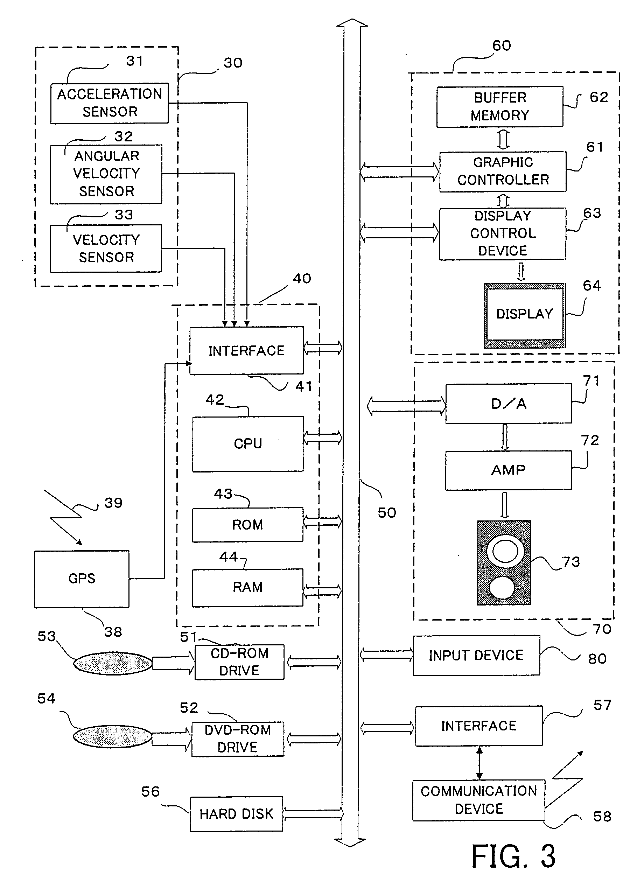

Next, the navigation terminal 16 constituting the system for providing the traveling plan for movable body of the present invention will be explained with reference to FIG. 3.

In FIG. 3, the navigation terminal 16 has a communication function to exchange information with the system operating site 11 when the user drives the vehicle according to the drive plan in addition to a typical navigation function. The navigation terminal 16 is an important constitutional element in this system.

The navigation terminal 16 is provided with a self-contained positioning apparatus 30, a GPS receiver 38, a system controller 40, a CD-ROM drive 51, a DVD-ROM drive 52, a hard disk unit 56, an interface 57 for communication, a communication device 58, a display unit 60, an audio output unit 70, and an input device 80.

The self-contained positioning apparatus 30 is constructed to include an acceleration sensor 31, an angular velocity sensor 32, and a velocity sensor 33. The acceleration sensor 31, which is constructed by a piezoelectric element, for example, detects an acceleration of a vehicle and outputs acceleration data. The angular velocity sensor 32, which is constructed by a vibration gyro, for example, detects an angular velocity of a vehicle when the vehicle changes its moving direction and outputs angular velocity data and relative azimuth data. The velocity sensor 33 detects the rotation of a vehicle shaft mechanically, magnetically, or optically and is constructed by a vehicle speed sensor, which generates a vehicle speed pulse as a pulse signal at every rotation for a predetermined angle around the vehicle shaft.

The GPS receiver 38 is intended to be used for detection of an absolute position of the vehicle from information about latitude, longitude, or the like and it is a part to receive a radio wave 39, which carries down link data including data for positioning from a plurality of satellites. It is used to learn a current position of the vehicle, as is the case with the self-contained positioning apparatus 30.

The system controller 40 includes an interface 41, a CPU (Central Processing Unit) 42, a ROM (Read Only Memory) 43 and a RAM (Random Access Memory) 44 and is designed to control the whole system.

The interface 41 performs an interface operation with the acceleration sensor 31, the angular velocity sensor 32, the velocity sensor 33, and the GPS receiver 38. From them respectively, it inputs into the system controller 40 the vehicle speed data, the acceleration data, the angular velocity data, the relative azimuth data, GPS measurement data, absolute azimuth data, image data of surroundings etc.

The CPU 42 has such a function that judges information to be presented to the driver on the basis of the inputted various data, prepares the information, and presents the information, as well as controlling the whole system controller 40. However, depending on the structure of the apparatus, it is also possible to install a CPU for exclusively controlling assist information of this drive.

The ROM 43 has a not-illustrated non-volatile memory where a control program etc. for controlling the system controller 40 is stored. The RAM 44 readably stores various types of data such as route data, which are set in advance by the user through the input device 80, and supplies a working area to the CPU 42.

The system controller 40, the CD-ROM drive 51, the DVD-ROM drive 52, the hard disk unit 56, the interface 57 for communication, the display unit 60, the audio output unit 70, and the input device 80 are mutually connected through a bus line 50.

The CD-ROM drive 51 and the DVD-ROM drive 52 read a control program corresponding to each embodiment and various types of data such as road data and the like from a CD-ROM 53 and a DVD-ROM 54 respectively and then output them under the control of the system controller 40.

Moreover, under the control of the system controller 40, the CD-ROM drive 51 and the DVD-ROM drive 52 may have such a function that reads out video data and audio data as contents information from the CD-ROM 53 and the DVD-ROM 54, respectively.

Incidentally, it is possible to dispose either one of the CD-ROM drive 51 and the DVD-ROM drive 52, and it is also possible to dispose a CD and DVD compatible drive.

The hard disk unit 56 regularly or occasionally stores map data, which are read from the CD-ROM drive 51 or the DVD-ROM drive 52 and which corresponds to position information of the vehicle in motion measured by the GPS receiver 38 etc. Alternatively, it stores the audio data and the video data, which are read from the CD-ROM drive 51 or the DVD-ROM drive 52, as the contents information. This makes it possible to read out and output to play the contents stored in the CD-ROM 53 or the DVD-ROM 54 while reading out the map information stored in the hard disk unit 56. Alternatively, this makes it possible to read out the map information stored in the CD-ROM 53 or the DVD-ROM 54 while reading and outputting to play the contents information stored in the hard disk unit 56.

The communication device 58 is constructed by a cellar phone, for example, and is equipped with such a function that can download the audio data, the video data, the map data, or the like, or predetermined types of data regarding those data through the interface 57 for communication, which constitutes a modern or the like.

The display unit 60 displays the above-described various types of display data under the control of the system controller 40. The display unit 60 is provided with: a graphic controller 61, which controls the whole display unit 60 on the basis of control data transmitted from the CPU 42 through the bus line 50; a buffer memory 62, which is constructed by a memory such as a VRAM (Video RAM) etc. and which temporarily memorizes immediately displayable image information; a display control device 63, which controls of display of a display 64 such as a compact LCD (Liquid Crystal Device), an EL (Electro-Luminescence) display, a CRT (Cathode Ray Tube), or the like on the basis of image data outputted from the graphic controller 61; and the display 64. The display 64 is constructed by a liquid crystal display device etc., on the order of 5 to 10 inches in diagonal length for example and is installed around a front panel inside the vehicle. The assist information by an image to the driver, which is judged and prepared at the CPU 42, is displayed on the display 64.

The audio output unit 70 is provided with: a D/A (Digital to Analog) converter 71, which performs a D/A conversion of the sound digital data transmitted through the bus line 50 from the CD-ROM drive 51, the DVD-ROM 52, or the RAM 44 etc., under the control of the system controller 40; an amplifier (AMP) 72, which amplifies a sound analog signal outputted from the D/A converter 71; and a speaker 73, which converts the amplified sound analog signal to voice or sound and which outputs it into the vehicle. The assist information by a sound or voice to the driver, which is judged and prepared at the CPU 42, is outputted from this speaker 73.

The input device 80 is provided with a key, a switch, a button, a remote controller, an audio input device, or the like, to input various types of commands and data. The driver inputs instructions to obtain objective information, to choose and judge the information, to transmit the information, or the like by operating the input device 80. The input device 80 is preferably installed in the vicinity of the display 64 mounted on the vehicle in view of convenience of operation.

Next, a table indicating the order of priority in FIG. 4 will be explained. This is a table which is formed on the basis of both the advertisements of the facilities which the facility companies provide for the navigation company and their fees, and it is used as the order of providing the advertisements to the user when the user searches with the presented condition. Its format is not limited to what is shown in FIG. 4. It may be enough to construct a database able to present the facilities that meet the condition in a predetermined order.

As shown in FIG. 4, there are a hotel, a bowling alley, a parking lot, and a restaurant as the genre of facilities, for example, and there are companies "A" to "E". Now, focusing on the hotel, the order of priority of a company B is in the first place, and then a company D and a company E follow it. Namely, this indicates that the advertisement fee of the hotel becomes expensive and the emphasis of the business operation becomes high in the order of the companies B, D, and E. At the same time, it indicates that a company A and a company C do not run a hotel business or that they do not put their advertisements. Therefore, when a user requires presentation of accommodation facilities, the hotel of the company B is presented firstly, and secondly the one of the company D is presented, and thirdly the one of the company E is presented. The same things are performed in the case of the bowling alley, the parking lot, and the restaurant as well.

Data processing in the first embodiment, as designed above, and each embodiment, which will be described below, is intended to be executed mainly at the control device 111 shown in FIG. 2 and the CPU 42 shown in FIG. 3. More concretely, in addition to a computer program for controlling a basic operation in a navigation system such as display of a route, a current position, a map, or the like, a computer program associated with presentation of plan information at the system operating site 11 is executed mainly at the control device 111 and a computer program associated with the plan information at the navigation terminal 16 is executed mainly at the CPU 42. Especially, the data processing associated with the presentation of the plan information as described above is intended to be executed regularly or occasionally by an interrupt processing or the like as one portion of a main navigation program. Then, the computer program executed at the control device 111 may be stored in a built-in memory device such as a RAM or the like in the control device 111 or it may be what is downloaded through the transmitting / receiving device 113. On the other hand, the computer program executed at the CPU 42 may be stored in the ROM 43, the CD-ROM 53, or the DVD-ROM 54, or it may be what is downloaded through the communication device 58 to the RAM42, the hard disk unit 56, or the like.

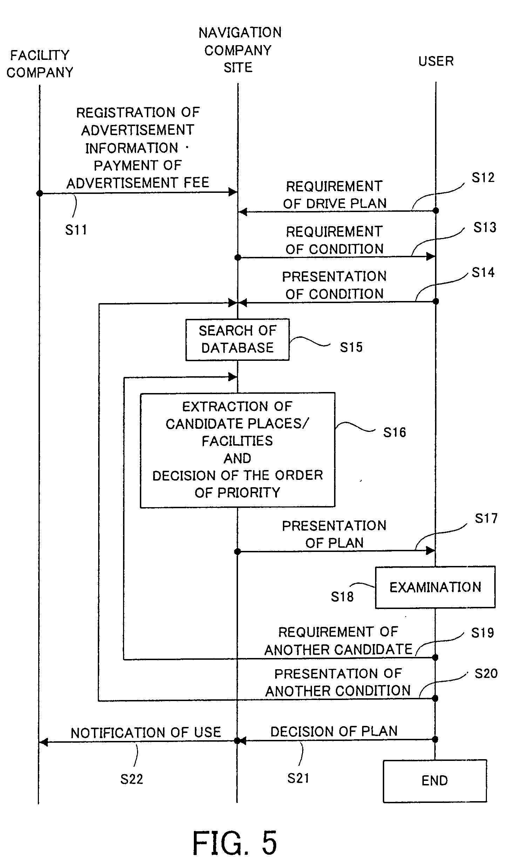

Next, the operational flow of providing the advertisement information in the system for providing a traveling plan for a movable body of the first embodiment will be explained with reference to a sequence chart in FIG. 5. FIG. 5 is a sequence chart showing the operational flow of the system for providing a traveling plan for a movable body with time. The sequence chart shows operations among constitutional elements with time. The horizontal lines show their mutual relationship and the vertical lines, which direct up to down, show time elapsing. Incidentally, these flows are controlled mainly by executing the program of a self-contained or built-in computer system in the system operating site 11 shown in FIG. 1.

Firstly, as shown in the sequence chart in FIG. 5, money is paid as an advertisement fee to a navigation company from various facility companies such as a hotel, a restaurant, an amusement facility, a tourist facility, a tourism organization, a local organization, and the like. At the same time, this advertisement information is registered in the advertisement information database 117 (step S11).

When a user accesses a communication navigation company site (hereunder, it is referred to simply as a "company site") to start to prepare a drive plan from the user terminal 13 (step S12), a presentation of a plan condition is required from the navigation company site (step S13). When the user presents the condition (step S14), the navigation company site searches each database for data registered therein, with the presented condition as a key word (step S15).

Then, candidate places and facilities are listed, and the order of priority on the presentation of the candidates is decided (step S16) If there is a table meeting the user's desiring condition in the format shown in FIG. 4, it is possible to use this, and if not, facilities are listed according to the desired condition and an operation of deciding the order of priority is performed.

Then, the candidates are presented to the user in the descending order of the priority (step S17). It is examined whether or not the user adopts the presented candidate (step S18), and in the case that the user requires another presentation of a candidate in the next place (step S19), the operational flow returns to step S17 to present it. In contrast, if the user desires to search for the data with another condition (step S20), the operational flow returns to step S14 to inform the navigation company site of the condition, thereby performing another search and another presentation in the same manner. In the case that a facility which the navigation company site presents is adopted as a drive plan of the user (step S21), the navigation company informs the relevant facility company of that (step S22). Because of this, the facility company can notice an economical effect obtained by using this system for providing the traveling plan for the movable body, so that it can judge the investment efficiency of advertisement fees.

As described above, according to the first embodiment, the drive plan is prepared through responses between the user and the navigation company site. Moreover, the facility company can judge the situation that its facility or facilities are being used by this system and the investment efficiency of the advertisement fees.

### (II) Second Embodiment

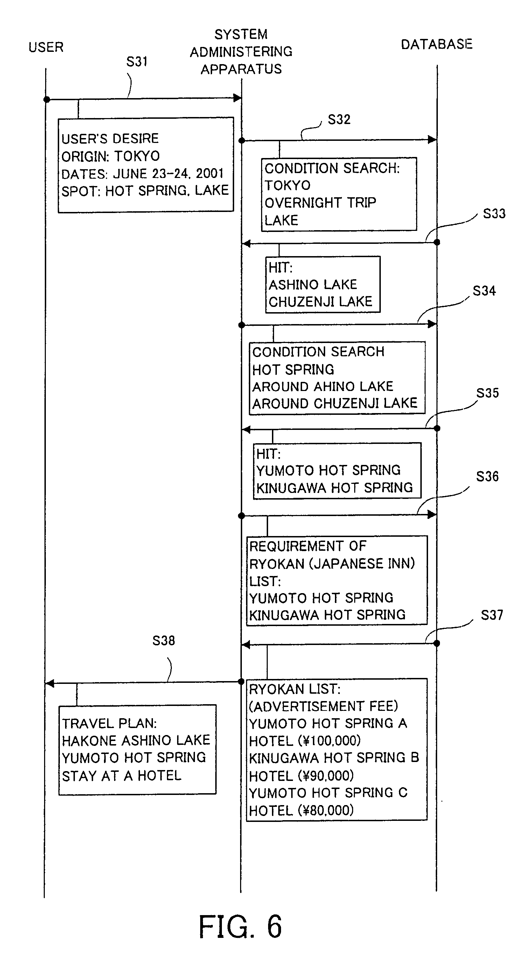

Next, the second embodiment will be explained with reference to FIG. 6.

The structure of hardware in the second embodiment is the same as that in the first embodiment described above, so that its explanation is omitted. In the second embodiment, the system operating site 11 is accessed from the user terminal 13 and a drive plan is prepared. Incidentally, FIG. 6 is a sequence chart in the second embodiment. The operational flow providing advertisement information in the second embodiment concretely shows procedures of searching and presenting in the step S14 to the step S17 in the first embodiment shown in FIG. 5 and other steps will be referred to the explanations in the first embodiment as the occasion demands.

In FIG. 6, the user informs the system administering apparatus 17 at the system operating site 11 of a drive plan condition (step S31). Suppose that an origin is "Tokyo", an overnight trip on "June 23 to 24", and a desired place is somewhere with a "hot spring" and a "lake". In response to this, the system administering apparatus 17 accesses the database 18 to search it with such a condition as leaving Tokyo for an overnight trip and such a condition that a destination is a lake (step S32). From the database 18, Ashinoko (Ashino Lake) and Chuzenjiko (Chuzenji Lake) are detected as lakes according to the condition (step S33). Then, after it is searched with hot spring places around Ashinoko and Chuzenjiko (step S34), Yumoto Onsen (Yumoto hot spring) and Kinugawa Onsen (Kinugawa hot spring) are detected as hot spring places according to the condition from the database 18 (step S35).

Then, after searching for ryokans or Japanese style inns in Yumoto Onsen and Kinugawa Onsen (step S36), Yumoto Onsen A hotel, Yumoto Onsen C hotel and Kinugawa Onsen B hotel are detected, and they are presented in the hit list in the descending order of the advertisement fees, which facility companies pay, as follows: Yumoto Onsen A hotel (advertisement fee ¥100,000), Kinugawa Onsen B hotel (advertisement fee ¥90,000), and Yumoto Onsen C hotel (advertisement fee ¥80,000) (step S37). Then, to the user, such a plan that the destination is Hakone Ashinoko and the ryokan is Yumoto onsen Ahotel is presented (step S38). Incidentally, if the user requires another candidate with respect to this (refer to the step S19 in FIG. 5), Kinugawa Onsen B hotel, whose advertisement fee is in the second place, is presented as a plan.

As described above, according to the second embodiment, the aspect of concrete operations becomes clear, so that it becomes possible to operate facilities reflecting a facility company's management importance.

### (III) Third Embodiment

Next, the third embodiment will be explained.

The structure of hardware in the third embodiment is the same as that in the first embodiment described above, so that its explanation is omitted. In the third embodiment, the navigation terminal 16 is used as an access device from a user instead of the user terminal 13 in the first embodiment. It is connected to the system operating site 11 through the wireless line 15. The formulation procedure of the drive plan is the same as that explained in the first embodiment. However, the decided drive plan is directly stored into the navigation terminal 16, which saves the trouble of transporting the plan to the navigation terminal 16 more than the case of using the user terminal 13.

Under the structure of the navigation terminal 16 shown in FIG. 3, it is connected through the wireless line 15 to the transmitting / receiving device 113 (FIG. 2) in the system administering apparatus 17 at the communication device 58, and the transmitted and received information is recorded into and is read out from the hard disk unit 56 through the bus line 50 and the interface 57. Moreover, the information is processed at the display unit 60 or the audio output device unit 70, and then it is displayed at the display 64 or is outputted as voice or sound by the speaker 73, thereby having it used for a plan preparation.

As described above, according to the third embodiment, a drive plan is directly set between the navigation terminal 16 and the system operating site 11, and the set plan is recorded into the navigation terminal 16 without moving it anywhere, so that it is possible to set a route directly.

Especially, if such a structure that presentation of the drive plan information is directly required to the system operating site 11 from the navigation terminal 16 is adopted, as described above, it is possible to present timely the advertisement information such as restaurant information obtained in the case that the afternoon comes while driving and so on, for example.

### (IV) Fourth Embodiment

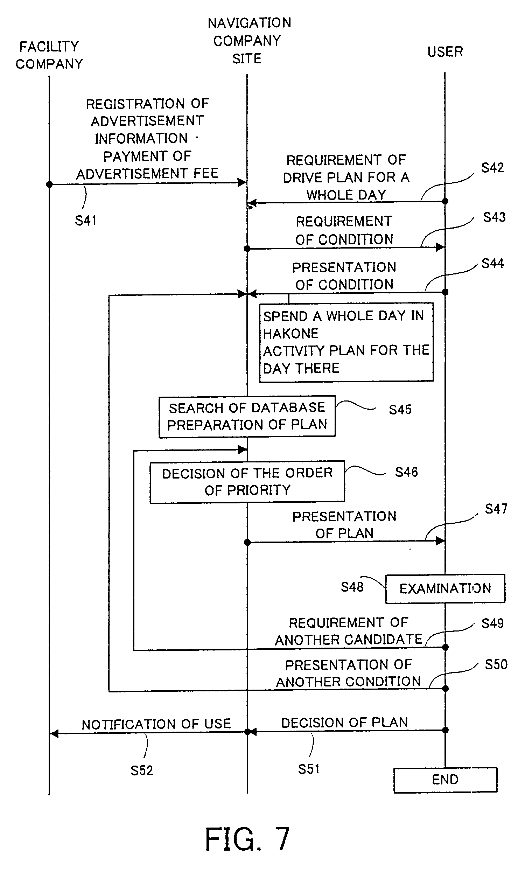

Next, the fourth embodiment will be explained with reference to FIG. 7.

The structure of hardware in the fourth embodiment is the same as that in the first embodiment described above, so that its explanation is omitted. FIG. 7 is a sequence chart in the fourth embodiment. The fourth embodiment indicates the case that a user desires to construct the whole plan such as a drive plan for a whole day.

As shown in the sequence chart in FIG. 7, advertisements are put to the navigation company from various facility companies such as a hotel, a restaurant, an amusement facility, and the like, and the costs are paid (step S41).

Then, when a user requires a preparation of a drive plan for a whole day from the user terminal 13 (step S42), a presentation of a plan condition is required form a company site (step S43). The user presents such a condition that the trip will be a day's drive to Hakone, for example (step S44). It is possible to add an origin, a departure time, and an arrival time at home to the condition and then present a new one. The navigation company site searches data registered in each database with the presented condition as a keyword or keywords and prepares a plan for a whole day while taking (i) the order of the priority of the facilities and (ii) the restrictions of time into account (step S45).

The navigation company site decides the order of the priority, which will be presented to the user, on some of the prepared plans (step S46). There are various methods of deciding the overall order of plans. In this case, the following may be conceivable: a method of ranking the plans in the descending order of their total amounts of fees after summing the advertisement fees on the facilities to be used for each plan; a method of deciding the order on the basis of the sum values obtained by simply summing the priority order values on their respective facilities (i.e. a method of ranking the plans in the ascending order of these priority order values); and so on.

Then, the navigation company site presents the plan of the highest priority from among some of the prepared plans to the user (step S47). The user examines this plan (step S48). In the case that the user requires another plan (step S49), the operational flow returns to step S46 and the navigation company site is supposed to present a plan in the next place. Moreover, in the case that another condition is presented from the user (step S50), the operational flow returns to step S44 and a search is performed according to the condition.

Moreover, if the user does not require a next presentation, the plan is adopted (step S51) and the navigation company site informs a facility company which owns the adopted facility of that (step S52). Because of this, a facility company can learn an effect obtained by the facility's using this system, so that it can judge the investment efficiency of advertisement fees.

It has been explained above the case of requesting a preparation of a drive plan for a whole day. Obviously, the case of preparing a plan for two days or for a week can be performed in the same manner.

As described above, according to the fourth embodiment, a user can easily prepare a drive plan for the whole planned day, and at the same time, a company site can operate facilities reflecting its management importance.

### (V) Fifth Embodiment

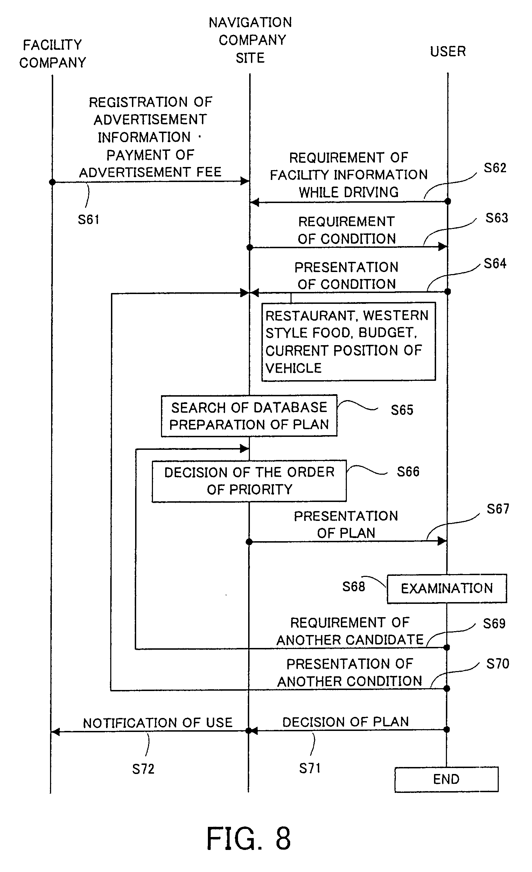

Next, the fifth embodiment will be explained with reference to FIG. 8.

The structure of hardware in the fifth embodiment is the same as that in the first embodiment described above, so that its explanation is omitted. Incidentally, FIG. 8 is a sequence chart in the fifth embodiment. The fifth embodiment is associated with the presentation of a plan which is performed in the case that a user comes to desire to use a facility such as a restaurant or the like.

As shown in the sequence chart in FIG. 8, advertisements are put to the navigation company from a facility company such as a restaurant or the like and their fees are paid (step S61).

Then, the user accesses the navigation company site from the navigation terminal 16 mounted on the vehicle to require a guidance of a restaurant while driving because he or she comes to desire to use it, for example (step S62). The navigation company requires concrete conditions of a restaurant, for example, the type of food such as Japanese food, western style food, Chinese food and the like, a budget, and so on, and it requires a current position of the vehicle as well (step S63).

After such conditions are presented from the user (step S64), a search for restaurants is performed with reference to the map database 116 from the information on the current position of the vehicle (step S65). Then, the order of the priority on the searched restaurants is decided (step S66), and one of the restaurants is presented to the user according to the decided order of the priority (step S67). In this case, it is possible to calculate and present a scheduled time to arrive at the restaurant if the information on the vehicle speed has been obtained. Then, the user examines the presented plan (step S68). In the case that another restaurant is required (step S69), the operational flow returns to step S66 to present a restaurant in the second place.

Moreover, in the case that another condition is presented from the user (step S70), the operational flow returns to the step S64 and a search is performed according to the condition. If the user does not require a next presentation, the plan is adopted (step S71) and the navigation company site informs the facility company, which owns the adopted facility of that (step S72). Because of this, the facility company can learn an effect obtained by the facility's using this system, so that it can judge the investment efficiency of advertisement fees.

As described above, according to the fifth embodiment, a user can find an objective facility even if it is a sudden requirement. At the same time, a facility company becomes able to operate facilities reflecting its management importance.

### (VI) Sixth Embodiment

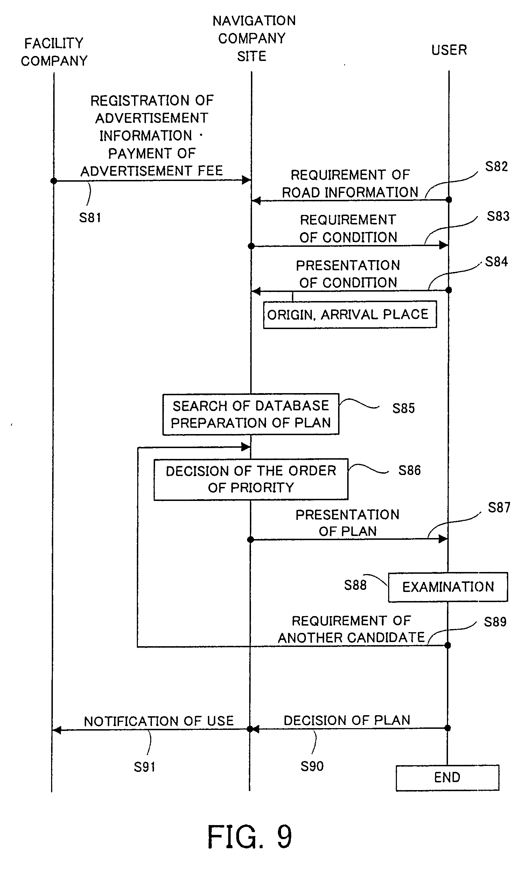

Next, the sixth embodiment will be explained with reference to FIG. 9.

The structure of hardware in the sixth embodiment is the same as that in the first embodiment described above, so that its explanation is omitted. Incidentally, FIG. 9 is a sequence chart in the sixth embodiment. The sixth embodiment indicates a case associated with the obtainment of information on an expressway and a toll road, both of which are used until an arrival to a destination in driving.

As shown in the sequence chart in FIG. 9, advertisements are put to a navigation company from a facility company, such as a road public corporation, a municipal corporation, a semipublic enterprise, or the like, which is a right holder or an owner of an expressway and a toll road and their fees are paid (step S81).

When the user prepares a drive plan or in the process of arriving at a destination while driving, there are some routes. The user accesses the navigation company site to obtain information on a local street or an expressway and a toll road, which are to be chosen at the above mentioned time (step S82). If the user is at home, the requirement is performed by the user terminal 13, and if the user is driving, it is performed by the navigation terminal 16. Then, a concrete condition such as an origin, a current position, a destination, an estimated road cost, a scheduled departure time, a desired arrival time, and the like is required from the navigation company (step S83).

After such a condition is presented from the user (step S84), a search for a road including a toll road to be used on the route is performed and a plan is then prepared with reference to the map database 116 from the information on an origin and a current position of the vehicle (step S85). Then, the order of the priority on the searched toll road is decided (step S86), and the road to be used is presented to the user according to the order of the priority (step S87). Then, the user examines the presented plan (step S88). In the case that the presentation of another plan is required (step S89), the operational flow returns to step S86 to present a plan in the second place.

Moreover, if the user does not require a next presentation, the plan is adopted (step S90) and the navigation company site informs a facility company which owns the adopted facility of that (step S91). Because of this, the facility company can learn an effect obtained by the facility's using this system, so that it can judge the investment efficiency of advertisement fees.

As described above, according to the sixth embodiment, a user can find a route leading to a destination, accurately. At the same time, a facility company becomes able to operate facilities reflecting its management importance.

Incidentally, in each embodiment described above, typical navigation operations such as displaying a map of vicinity of the current position, displaying the current position on the map, searching for a route to a destination, a route guidance, or the like may be designed to be performed at least partially on the side of the system operating site 11 by using the map database 116 or the like in the same manner as the processing associated with presentation of various drive plan information described above. Alternatively, the typical navigation operations described above may be performed on the side of the navigation terminal 16 for the vehicle by using the map data or the like stored in the CD-ROM 53 or the DVD-ROM 54 aside from the processing associated with the presentation of drive plan information described above.

Moreover, the navigation terminal 16 of the present invention can be applied not only to one for a vehicle as described in each embodiment above but also to various ones for various movable bodies such as an airplane, a ship, a bicycle, or the like and further to one for a pedestrian, an animal or the like who use a cellar phone, a portable or hand-carry type information terminal, or the like.

## Claims

1. A system (10) for providing a travel plan **characterized in that** said system comprises a communication terminal (13, 16) for a user and a system operating site (11) for a system operating company, which are connected to each other through a communication line (12, 15), to thereby provide travel plan information indicating one or a plurality of various travel plans depending on a requirement of the user, wherein
said system operating site presents the user with advertisement information meeting the requirement of the user from among advertisement information, which is entrusted in advance to the system operating company from a facility company, at said communication terminal as at least one portion of the travel plan information according to the order of priority based on the amount of a fee required for entrusting the advertisement information, which is paid to the system operating company from the facility company.

2. A system (10) for providing a drive plan **characterized in that** said system comprises a movable body navigation terminal (16) for a user and a system operating site (11) for a navigation company, which are connected to each other through a communication line (15), to thereby provide drive plan information indicating one or a plurality of various drive plans depending on a requirement of the user, said movable body navigation terminal being mounted on a movable body, wherein
said system operating site presents the user with advertisement information meeting the requirement of the user from among advertisement information, which is entrusted in advance to the navigation company from a facility company, at said movable body navigation terminal as at least one portion of the drive plan information according to the order of priority based on a predetermined standard.

3. The system (10) according to claim 2, **characterized in that**
said system operating site (11) is further connected to a user terminal (13), which is not mounted on the movable body, through the communication line (12) and
the requirement of the user is transmitted to said system operating site from the user terminal.

4. The system (10) according to claim 2 or 3, **characterized in that**
said system operating site (11) is further connected to a facility terminal (14) installed at a facility of the facility company through the communication line (12) and
the advertisement information is transmitted to said system operating site from the facility terminal.

5. The system (10) according to any one of claims 2 to 4, **characterized in that** the advertisement information is presented sequentially according to the order of priority when it is presented as one portion of the drive plan information.

6. The system (10) according to any one of claims 2 to 4, **characterized in that** the advertisement information is presented in a form of a table or list in which the advertisement information are ranked according to the order of priority when it is presented as one portion of the drive plan information.

7. The system (10) according to any one of claims 2 to 6, **characterized in that** the predetermined standard is the amount of a fee required for entrusting the advertisement information, which is paid to the navigation company from the facility company.

8. The system (10) according to any one of claims 2 to 7, **characterized in that** said system operating site (11) further comprises a plan preparing device (17) for preparing a drive plan including a service indicated by the advertisement information as the drive plan information and
the prepared drive plan is presented to the user at said movable body navigation terminal (16).

9. The system (10) according to any one of claims 2 to 8, **characterized in that** advertisement information meeting a current position detected at said movable body navigation terminal (16) is presented from among the entrusted advertisement information in addition to the requirement of the user.

10. The system (10) according to any one of claims 2 to 9, **characterized in that** said system operating site (11) comprises:
an advertisement information storing device (18, 117) for registering the advertisement information which the facility company entrusts to the navigation company;
a search device (112) for searching said advertisement information storing device for the advertisement information meeting the requirement of the user; and
a transmitting device (113) for transmitting the searched advertisement information to said movable body navigation terminal.

11. The system (10) according to claim 10, **characterized in that** said transmitting device (113) sequentially transmits the searched advertisement information according to the order of priority.

12. The system (10) according to claim 10 or 11, **characterized in that** said system operating site (11) further comprises a map data storing device (18, 116) for storing map data and
said search device (112) searches for the advertisement information meeting the requirement of the user, with adding to a search condition such a condition that is defined by a relative relationship between a facility position of the facility company and a current position, which is detected at said movable body navigation terminal (16), on a map shown by the stored map data.

13. The system (10) according to any one of claims 10 to 12, **characterized in that** said system operating site (11) further comprises a map data storing device (18, 116) for storing map data and
said search device (112) searches for the advertisement information meeting the requirement of the user, with adding to a search condition such a condition that is defined by a relative relationship between (i) a facility position of the facility company and (ii) a scheduled route to a destination, which is set in advance, as well as a current position, which is detected at said movable body navigation terminal (16), on a map shown by the stored map data.

14. The system (10) according to any one of claims 10 to 13, **characterized in that** said system operating site (11) further comprises a user data storing device (18, 114) for storing user data indicating an attribute of a user and
said search device (112) searches for the advertisement information meeting the requirement of the user, with adding to a search condition such a condition that is defined by the stored user data.

15. The system (10) according to any one of claims 10 to 14, **characterized in that** said system operating site (11) further comprises a drive plan data storing device (18, 115) for storing drive plan data indicating a past drive plan and
said search device (112) searches for the advertisement information meeting the requirement of the user, with adding to a search condition such a condition that is defined by the stored drive plan data.

16. A computer program of instructions **characterized in that** said computer program of instructions cause a computer, which is in a system (10) for providing a drive plan comprising a movable body navigation terminal (16) for a user and a system operating site (11) for a navigation company, connected to each other through a communication line (15), to thereby provide drive plan information indicating one or a plurality of various drive plans depending on a requirement of the user, to function as said movable body navigation terminal, said movable body navigation terminal being mounted on a movable body, wherein
said system operating site presents the user with advertisement information meeting the requirement of the user from among advertisement information, which is entrusted in advance to the navigation company from a facility company, at said movable body navigation terminal as at least one portion of the drive plan information according to the order of priority based on a predetermined standard.

17. A computer program of instructions **characterized in that** said computer program of instructions cause a computer, which is in a system (10) for providing a drive plan comprising a movable body navigation terminal (16) for a user and a system operating site (11) for a navigation company, connected to each other through a communication line (15), to thereby provide drive plan information indicating one or a plurality of various drive plans depending on a requirement of the user, to function as said system operating site, said movable body navigation terminal being mounted on a movable body, wherein
said system operating site presents the user with advertisement information meeting the requirement of the user from among advertisement information, which is entrusted in advance to the navigation company from a facility company, at said movable body navigation terminal as at least one portion of the drive plan information according to the order of priority based on a predetermined standard.

18. A method of providing a drive plan for a movable body in a system (10) for providing a drive plan comprising a movable body navigation terminal (16) for a user and a system operating site (11) for a navigation company, which are connected to each other through a communication line (15), to thereby provide drive plan information indicating one or a plurality of various drive plans depending on a requirement of the user, said movable body navigation terminal being mounted on a movable body, **characterized in that** said method comprises the process of:
presenting, from said system operating site, the user with advertisement information meeting the requirement of the user from among advertisement information, which is entrusted in advance to the navigation company from a facility company, at said movable body navigation terminal as at least one portion of the drive plan information according to the order of priority based on a predetermined standard.

19. The method according to claim 18, **characterized in that** the predetermined standard is the amount of a fee required for entrusting the advertisement information, which is paid to the navigation company from the facility company.

20. The method according to claim 19 or 20, **characterized in that** advertisement information meeting a current position detected at said movable body navigation terminal (16) is presented from among the entrusted advertisement information in addition to the requirement of the user.
